# EUROPÄISCHE PATENTSCHRIFT

(11) **EP 3 692 343 B1**
(45) Veröffentlichungstag und Bekanntmachung des Hinweises auf die Patenterteilung: **05.10.2022**
(21) Anmeldenummer: 17780734.4
(22) Anmeldetag: 06.10.2017
(51) Int. Cl.: G01F 23/284, G01S 7/03, G01S 7/35, G01S 13/34

(54) **FÜLLSTANDMESSGERÄT MIT RADARSYSTEM**
LEVEL GAUGE WITH RADAR SYSTEM
JAUGE DE NIVEAU AVEC SYSTÈME RADAR

(43) Veröffentlichungstag der Anmeldung: 12.08.2020
(73) Patentinhaber: VEGA Grieshaber KG, 77709 Wolfach (DE)
(72) Erfinder: WELLE, Roland, 77756 Hausach (DE); BÖRSIG, Jörg, 77776 Schapbach (DE); WÄLDE, Steffen, 78078 Niedereschach (DE)
(74) Vertreter: Maiwald Patent- und Rechtsanwaltsgesellschaft mbH
(86) Internationale Anmeldenummer: PCT/EP2017/075530
(87) Internationale Veröffentlichungsnummer: WO 2019/068347

(56) Entgegenhaltungen:
- EP-A1- 2 770 308
- EP-A1- 3 139 139
- EP-A1- 3 182 505
- DE-A1-102015 219 612
- DE-B3-102011 056 963
- US-A- 2 595 358
- US-A1- 2007 186 678
- US-A1- 2009 079 621

## Beschreibung

### Gebiet der Erfindung

Die Erfindung betrifft die Füllstandmessung. Insbesondere betrifft die Erfindung ein Füllstandmessgerät mit einem integrierten Mikrowellenschaltkreis in Form eines Radarsystems on Chip, ein Verfahren zum Messen eines Füllstands eines Mediums in einem Behälter, ein Verfahren zum Messen einer Topologie einer Oberfläche eines Mediums in einem Behälter, ein Programmelement und eine computerlesbares Medium.

### Hintergrund

Füllstandmessung mit Radar ist heute Stand der Technik. Im Gegensatz zu vielen anderen Bereichen wurde der Durchbruch für die Radartechnik in der Füllstandmessung erst möglich, nachdem extrem kleine Reflexionssignale von der Elektronik der Messgeräte erfasst und verarbeitet werden konnten.

Moderne Messgeräte zeichnen sich nicht nur durch eine hohe Sendefrequenz, die typischerweise im Bereich von 75 bis 85 GHz liegen kann, aus, sondern sind auch in der Lage, Amplitudenunterschiede des reflektietten Signals in einean Bereich bis zu 120 dB sicher zu verarbeiten.

Möglich wurde dies durch den Einsatz sehr rauscharmer Hochfrequenzschaltungskomponenten, die üblicherweise in Form von integrierten Mikrowellenschaltkreisen (MMIC's) auf Basis von Galliumarsenid (GaAs) in den Geräten Verwendung finden. Mit der Anwendung von Galliumarsenidbausteinen wurde es auch möglich, die zur Messung verfügbare Hochfrequenzleistung zu erhöhen. Nachteilig an dieser Lösung ist jedoch der erhöhte Preis der Bauteile.

EP 3 139 139 A1 beschreibt ein Füllstandmessgerät mit Störsignal-Erfassungsmodus zum wahlweisen Einnehmen eines Störsignal-Erfassungsmodus zum Detektieren, ob das Empfangssignal ein Störsignal aufweist, und ein Füllstandmessmodus zum Messen des Füllstandes. Das Sendesignal weist im Störsignal-Erfassungsmodus eine deutlich geringere Intensität auf als im Füllstandmessmodus.

US 2007/0186678 A1 beschreibt ein Puls-Füllstandradargerät in 24-GHz-Technik.

EP 3 139 139 A1 beschreibt ein Füllstandmessgerät mit Störsignal-Erfassungsmodus zum wahlweisen Einnehmen eines Störsignal-Erfassungsmodus zum Detektieren, ob das Empfangssignal ein Störsignal aufweist, und ein Füllstandmessmodus zum Messen des Füllstandes.

DE 10 2015 219612 A1 beschreibt ein FMCW-Füllstandmessgerät in Form eines Radarsystems on Chip mit mehreren Sendekanälen auf dem Radarchip und einem oder mehreren Empfangskanälen auf dem Radarchip.

EP 3 139 139 A1 beschreibt ein FMCW-Füllstandmessgerät mit einer Rauschpegelreduktionseinrichtung.

### Zusammenfassung der Erfindung

Es ist eine Aufgabe der Erfindung, ein Füllstandmessgerät mit einem integrierten Mikrowellenschaltkreis in Form eines Radarsystems on Chip bereitzustellen, das für die Füllstandmessung geeignet ist.

Diese Aufgabe wird durch die Gegenstände der unabhängigen Patentansprüche gelöst. Weiterbildungen der Erfindung ergeben sich aus den Unteransprüchen und der folgenden Beschreibung.

Ein erster Aspekt der Erfindung betrifft ein Füllstandmessgerät gemäß dem unabhängigen Patentanspruch mit einem integrierten Mikrowellenschaltkreis in Form eines Radarsystems on Chip. Ein solches Radarsystem on Chip ist ein hochintegrierter Mikrowellenschaltkreis (MMIC) mit Schaltungskomponenten für digitale Funktionen, welches, gemäß einer Ausführungsform, in der Lage ist, die komplette Funktionalität eines Radarsystems für die Signalerzeugung, die Signalverarbeitung und die Überführung der Empfangssignale in eine digitale Darstellung auf einem einzigen Radarchip zu integrieren.

Das Radarsystem on Chip (RSOC) weist mehrere Sendekanäle auf, wobei jeder dieser Sendekanäle eingerichtet ist, ein hochfrequentes Sendesignal mit einer Frequenz im Gigahertzbereich zu erzeugen, beispielsweise im Bereich von 75 bis 85 GHz oder darüber. Auch sind einer oder mehrere Empfangskanäle vorgesehen , wobei diese eingerichtet sind, jeweils ein an der Füllgutoberfläche reflektiertes Sendesignal zu empfangen.

Es ist eine Rauschpegelreduktionseinrichtung vorgesehen , die eingerichtet ist, das Signal-Rausch-Verhältnis des Empfangssignals zu erhöhen, also zu verbessern. Das Empfangssignal ist hierbei das vom Füllstandmessgerät empfangene Signal, das auf die an der Füllgutoberfläche reflektierten Sendesignale zurückzuführen ist. Das Signal-Rausch-Verhältnis wird erhöht, indem die Ergebnisse mehrerer, zeitlich hintereinander durchgeführter Messungen gemittelt werden.

Alternativ oder zusätzlich ist eine Signalpegelerhöhungseinrichtung vorgesehen, die eingerichtet ist zur Kombination von zumindest zwei der Sendekanäle, um daraus ein kombiniertes Sendesignal mit erhöhter Leistung zu erzeugen und/oder zur Kombination von zumindest zwei der Empfangskanäle zum Erzeugen eines kombinierten Empfangssignals mit erhöhter Empfangsleistung.

Diese Signalpegelerhöhung führt dazu, dass das abgestrahlte Sendesignal bei gleicher Leistung des Füllstandmessgeräts bzw. des Radarsystems on Chip insgesamt eine höhere Sendeleistung aufweist, so dass auch schwächer reflektierende Medien oder Objekte zuverlässig detektiert werden können. Dies führt letztendlich zu einer Signalverbesserung.

Entsprechend verhält es sich mit der Rauschpegelreduktionseinrichtung. Bei gleicher Gesamtleistung des Radarsystems on Chip wird das Messergebnis insgesamt verbessert, da das Signal-Rausch-Verhältnis erhöht wird. Auch dies führt also zu einer Signalverbesserung, was die sinnvolle Verwendbarkeit bestimmter Radarsysteme on Chip für die Füllstandmessung erst ermöglicht, da andernfalls die Messergebnisse nicht ausreichend genau wären.

Gemäß einer Ausführungsform der Erfindung ist die Rauschpegelreduktionseinrichtung eingerichtet, nach der Mittelung der Ergebnisse der mehreren, zeitlich hintereinander durchgeführten Messungen festzustellen, ob ausreichend viele Messungen gemittelt wurden, um eine bestimmte Messqualität zu erzielen. Ist diese Messqualität nicht erzielt worden, werden weitere Messungen getriggert, deren Ergebnisse ebenfalls der Mittelung zugeführt werden, um das Messergebnis weiter zu verbessern, indem das Signal-Rausch-Verhältnis erhöht wird.

Die Entscheidung, ob ausreichend viele Messungen gemittelt wurden, kann beispielsweise durch eine Schwellwertbetrachtung erfolgen. Liegt das durch die Mittelung erzielte Signal-Rausch-Verhältnis unter einem vorbestimmten Schwellwert, werden weitere Echokurven und / oder Messergebnisse erzeugt und in die Mittelung mit einbezogen. Dieser Vorgang kann mehrmals wiederholt werden, bis das Signal-Rausch-Verhältnis die gewünschte Qualität aufweist.

Gemäß der Erfindung ist das Füllstandmessegerät als frequenzmoduliertes Dauer-Signal-Füllstandmessgerät (FMCW) ausgeführt, wobei jede der zeitlich hintereinander durchgeführten Messungen einen Frequenzsweep umfasst, beispielsweise bei einer Startfrequenz von 75 GHz bis zu einer Maximalfrequenz von 85 GHz.

Gemäß einer weiteren Ausführungsform der Erfindung weist der integrierte Mikrowellenschaltkreis zumindest einen integrierten Analog-Digital-Wandler auf, eingerichtet zum Erzeugen des Empfangssignals in Form eines digitalisierten Zwischenfrequenzsignals, welches auf ein oder mehrere an der Füllgutoberfläche reflektierte Sendesignale zurückzuführen ist.

Gemäß einer weiteren Ausführungsform werden die vom A/D-Wandler erzeugten digitalisierten Zwischenfrequenzsignale von der Rauschpegelreduktionseinrichtung gemittelt.

Gemäß einer weiteren Ausführungsform der Erfindung ist an zumindest zwei (oder sogar allen) der Sendekanäle jeweils eine Antenne angeschlossen. Ebenso ist an zumindest zwei (oder allen) Empfangskanälen eine Antenne angeschlossen. Insbesondere kann vorgesehen sein, dass bestimmte (oder alle) Sendekanäle auch gleichzeitig als Empfangskanäle verwendet werden.

Gemäß einer weiteren Ausführungsform der Erfindung basiert der integrierte Mikrowellenschaltkreis auf BiCMOS-Technologie, in welcher SiGe- und CMOS-Schaltungselemente kombiniert sind.

Gemäß einer weiteren Ausführungsform der Erfindung basiert der integrierte Mikrowellenschaltkreis auf SiGe-Technologie.

Gemäß einer weiteren Ausführungsform der Erfindung basiert der integrierte Mikrowellenschaltkreis auf HF-CMOS-Technologie und weist Hochfrequenzschaltungsteile für Frequenzen von 75 GHz oder mehr auf.

Gemäß einer weiteren Ausführungsform ist, wie bereits angesprochen, jeder Sendekanal auch ein Empfangskanal, eingerichtet zum Empfangen des an der Füllgutoberfläche reflektierten Sendesignals.

Gemäß einer weiteren Ausführungsform der Erfindung ist das Füllstandmessgerät zur Erfassung der Topologie eines Mediums in einem Behälter ausgeführt, ist also in der Lage, die Füllgutoberfläche durch digitale Strahlformung abzuscannen.

Ein weiterer Aspekt der Erfindung betrifft ein Verfahren genmäß dem unabhängigen Patentanspruch 10 zum Messen eines Füllstands eines Mediums in einem Behälter oder einer Topologie einer Oberfläche des Mediums. Es wird ein hochfrequentes Sendesignal mit einer Frequenz von beispielsweise 75 GHz oder mehr erzeugt. Dies erfolgt mit jeweils einem von mehreren Sendekanälen. Die an der Füllgutoberfläche reflektierten Sendesignale werden daraufhin von mehreren Empfangskanälen empfangen. Hierfür werden die oben und im Folgenden beschriebenen Radarsysteme on Chip verwendet .

Um das Signal-Rausch-Verhältnis eines Empfangssignals, welches auf die an der Füllgutoberfläche reflektierten Sendesignale zurückzuführen ist, zu erhöhen, werden die Ergebnisse mehrerer, zeitlich hintereinander durchgeführter Messungen gemittelt. Alternativ oder zusätzlich werden zwei oder mehr der Sendekanäle miteinander kombiniert, um ein kombiniertes Sendesignal mit erhöhter Leistung zu erzeugen. Alternativ oder zusätzlich werden zwei oder mehr der Empfangskanäle miteinander kombiniert, um ein kombiniertes Empfangssignal mit erhöhter Leistung zu erzeugen. Ein weiterer Aspekt der Erfindung betrifft ein Programmelement, das, wenn es auf einem Prozessor eines Füllstandmessgeräts ausgeführt wird, das Füllstandmessgerät anleitet, die oben und im Folgenden beschriebenen Schritte durchzuführen.

Ein weiterer Aspekt der Erfindung betrifft ein computerlesbares Medium, auf dem das oben beschriebene Programmelement gespeichert ist.

Die im Folgenden im Hinblick auf das Füllstandmessgerät beschriebenen Eigenschaften können auch als Verfahrensschritte implementiert sein. Umgekehrt können sämtliche im Folgenden beschriebenen Verfahrensschritte in dem Füllstandmessgerät implementiert sein.

Im Folgenden werden mit Verweis auf die Figuren Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt ein Füllstandmessgerät, das in einem Behälter eingebaut ist.
Fig. 2 zeigt ein weiteres Füllstandmessgerät.
Fig. 3 zeigt ein weiteres Füllstandmessgerät.
Fig. 4A zeigt einen Frequenzsweep eines Sendesignals eines Füllstandradargeräts.
Fig. 4B zeigt eine Hintereinanderreihung mehrerer Frequenzsweeps eines Sendesignals eines Füllstandradargeräts.
Fig. 5 zeigt mehrere hintereinander durchgeführte Frequenzsweeps eines Sendesignals eines Füllstandradargeräts.
Fig. 6 zeigt ein Beispiel für eine Mittelung.
Fig. 7 zeigt ein Flussdiagramm eines Verfahrens gemäß einer Ausführungsform der Erfindung.
Fig. 8 zeigt ein Füllstandmessgerät gemäß einer Ausführungsform der Erfindung.
Fig. 9 zeigt ein Füllstandmessgerät gemäß einer weiteren Ausführungsform der Erfindung.
Fig. 10 zeigt ein Füllstandmessgerät gemäß einer weiteren Ausführungsform der Erfindung.
Fig. 11 zeigt ein Füllstandmessgerät gemäß einer weiteren Ausführungsform der Erfindung.
Fig. 12 zeigt ein Füllstandmessgerät mit einem Behälter gemäß einer weiteren Ausführungsform der Erfindung.
Fig. 13 zeigt ein Flussdiagramm eines Verfahrens gemäß einer Ausführungsform der Erfindung.

### Detaillierte Beschreibung von Ausführungsformen

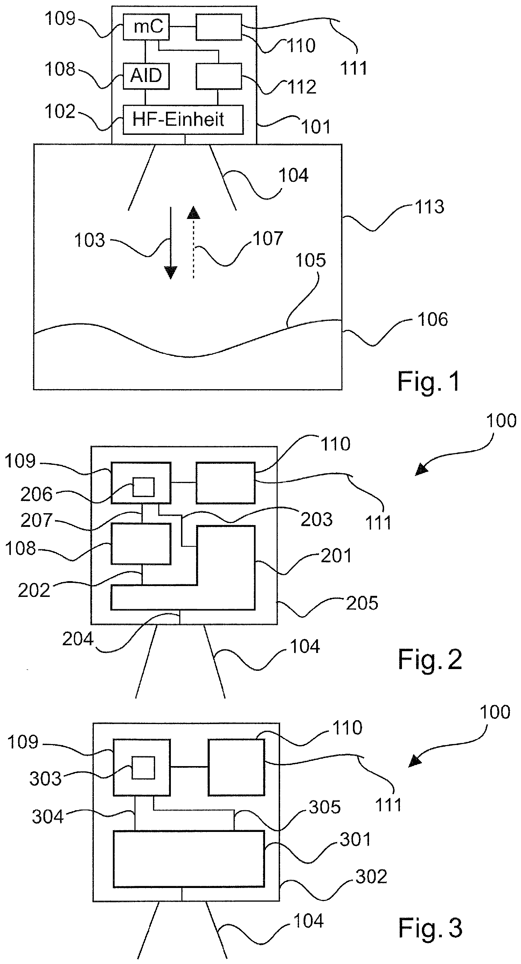

Fig. 1 zeigt ein Füllstandmessgerät in Form eines Füllstandradars. Das Messgerät 101 erzeugt mithilfe einer Steuerschaltung 112 und einer Hochfrequenzschaltung 102 ein Sendesignal 103 und strahlt dieses mithilfe einer Antenne 104 in Richtung einer Füllgutoberfläche 105 ab. Das Füllgut 106 reflektiert nur einen geringen Teil 107 der Energie des Sendesignals zurück zum Füllstandmessgerät. In der Hochfrequenzschaltung 102 wird das reflektierte Signal in ein niederfrequentes Zwischenfrequenzsignal umgesetzt und einer Analog-Digital-Wandlerschaltung 108 zugeführt. Diese digitalisiert das niederfrequente Echosignal und leitet die Digitalwerte an eine Signalverarbeitungsschaltung, beispielsweise einen Prozessor 109 weiter. Innerhalb dieses Prozessors wird nach bestimmten Verfahren der Abstand zum Füllgut bestimmt. Der auf diese Art ermittelte Messwert wird drahtlos oder drahtgebunden nach außen hin bereitgestellt. Üblicherweise wird an dieser Stelle eine sogenannte Zweileiterschnittstelle 111 verwendet, welche zum einen den Sensor 101 mit Energie versorgt, und zum anderen über das Einstellen eines zum Messwert proportionalen Stromwertes im Bereich zwischen 4... 20 mA innerhalb der Leitung 111 der Signalisierung des Messwertes nach außen hin dient.

Die in Füllstandradargeräten gemäß Fig. 1 üblicherweise verwendete Sendefrequenz liegt in einem Bereich von 6 GHz, 24 GHz oder zwischen 75 GHz und 85 GHz. Speziell für den zuletzt genannten Frequenzbereich kommen bislang ungehäuste GaAs-Halbleiterbauteile zum Einsatz, welche bedingt durch die Halbleitertechnologie an sich schon teuer sind, und welche zudem kostenintensiv durch Bonding auf der Platine in Serie verarbeitet werden müssen.

In den letzten Jahren wurden vermehrt Anstrengungen unternommen, MMIC's auf Basis preisgünstigerer Halbleitermaterialien zu realisieren. So können MMIC's auf Basis von Siliziumgermanium (SiGe), welches im Vergleich zu GalliumarsenidBausteinen neben reduzierten Kosten auch den Übergang zu höheren Frequenzen ermöglicht, verwendet werden. Werden hochintegrierte MMIC's auf Basis von SiGe verwendet, welche einen Großteil der für die analoge Signalerzeugung und Signalverarbeitung notwendigen Schaltungsteile auf einem Chip integrieren, erhöht sich jedoch das Rauschen (das Signal-Rausch-Verhältnis wird geringer) und die maximale Sendeleistung, die von solchen Schaltungskreisen bereitgestellt werden kann, sinkt.

Wurde zu früheren Zeiten vorgeschlagen, analoge Schaltungskomponenten auf einem Chip zu integrieren, so zielt die vorliegende Erfindung darauf ab, ein Füllstandmessgerät mit einem Radarsystem on Chip (Radar-SoC's) zu verwenden. Durch die Integration von CMOS-Schaltungskomponenten für digitale Funktionen wird es möglich, die komplette Funktionalität eines Radarsystems für die Signalerzeugung, die Signalverarbeitung und die Überführung der Empfangssignale in eine digitale Darstellung auf einem einzigen Radarchip zu integrieren. Hierfür können Siliziumgermanium und CMOS-Schaltungselemente (BiCMOS) kombiniert werden. Auch hat es sich als möglich erwiesen, Hochfrequenzschaltungsteile in spezialisierter CMOS-Technologie zu realisieren (HF-CMOS), so dass die Integration von digitalen Schaltungsteilen auf dem gleichen Chip bis hin zu kompletten Prozessoren technisch machbar ist, so dass Ein-Chip-Radarsysteme aufgebaut werden können, die für die Füllstandmessung einsetzbar sind.

Die Anforderungen an Radarsysteme zur Füllstandmessung unterscheiden sich erheblich von denen anderer Anwendungsgebiete, in denen es nicht so sehr auf die Genauigkeit der Messung und die Energieeffizienz, sondern vielmehr auf die Minimierung der Messzeit ankommt. Ein wichtiges Merkmal industrieller Füllstandmessgeräte ist es, dass auch extrem schwache Reflexionen eines Schüttgutes messtechnisch erfasst werden müssen. Durch den Einsatz von GaAs-MMIC's mit inhärent niedrigem Eigenrauschen und hoher Sendeleistung können selbst kleinste Reflexionssignale sicher verarbeitet werden. Eine signifikante Reduktion der Kosten eines Füllstandradarmessgeräts kann hingegen nur durch den Einsatz preisgünstiger Halbleitertechnologien (SiGe, HF-CMOS) und die weitergehende Integration erreicht werden. Der reduzierte Sendepegel und erhöhtes Eigenrauschen der zuletzt genannten Technologien steht dem Einsatz im Bereich der Füllstandmessung somit auf den ersten Blick entgegen.

Im Folgenden wird eine Lösung vorgeschlagen, wie preisgünstige BiCMOS und HF-CMOS basierte integrierte Radarchips in industriellen Radarfüllstandmessgeräten eingesetzt werden können.

Figur 2 zeigt einen ersten Schritt zur Kostenreduktion eines Füllstandmessgerätes 100, 205. Durch die Verwendung von Bauteilen 201 auf Basis von BiCMOS oder HF-CMOS kann ein erster Integrationsschritt vollzogen werden. Die Steuerschaltung 112, welche abhängig von der gewünschten Modulation des Sendesignals 103 beispielsweise in Form einer PLL, Fractionalen PLL oder gebrochen rationalen PLL realisiert sein kann, lässt sich als digitale Schaltungskomponente mit den integrierten Hochfrequenzschaltungsteilen auf einem gemeinsamen IC 201 integrieren.

Nach außen hin weist dieses IC lediglich eine Hochfrequenzschnittstelle 204 zum Anschluss einer oder mehrerer Antennen 104, eine analoge Schnittstelle 202 zum Auslesen der niederfrequenten Zwischenfrequenzsignale sowie eine digitale Schnittstelle 203 zur Steuerung und Parametrierung des Chips auf. Bedingt durch den Verzicht auf GaAs als Halbleitermaterial verschlechtern sich die Eigenschaften eines solchen Systems im Vergleich zum Aufbau der Figur 1 sowohl im Hinblick auf das Eigenrauschen der Halbleiterschaltungskreise als auch im Hinblick auf den maximal erzeugbaren Sendepegel, was beides zu einem reduzierten Bereich der durch das System erfassbaren Amplitudenunterschiede des reflektierten Echosignals führt.

Figur 3 zeigt einen weiteren Integrationsschritt. Im Baustein 301 sind neben den Hochfrequenzschaltkreisen 102 und der Steuerschaltung 112 auch die Schaltkreise zur Analog-Digitalwandlung 108 integriert. Das auf diese Weise definierte IC 301 ermöglicht einen radikal vereinfachten Systemaufbau, der durch die verwendete Halbleitertechnologie zu reduzierten Bausteinkosten führt. Darüber hinaus sind integrierte Schaltungen 201, 301 auch im Gehäuse herstellbar, wodurch ein kostenintensives Halbleiterbonding im Fertigungsablauf entfallen kann.

Sind von Seiten der Halbleiterbauteile signifikante Kosteneinsparungen durch den Wechsel der Technologie, den vereinfachten Systemaufbau sowie die kostengünstigere Fertigung darstellbar, so bringen die extremen Anforderungen im Bereich der Füllstandmessung technische Herausforderungen mit sich, welche zu überwinden sind, um die Verwendung hochintegrierter Chips (RSOC) in industriellen Füllstandmessgeräten zu ermöglichen. Schlüssel zur Lösung der beschriebenen Problematik ist die Erkenntnis, dass im Gegensatz zu den Zielmärkten Automobil und Automation im Bereich der Füllstandmessung regelmäßig von statischen oder extrem langsam veränderlichen Reflexionsobjekten ausgegangen werden kann.

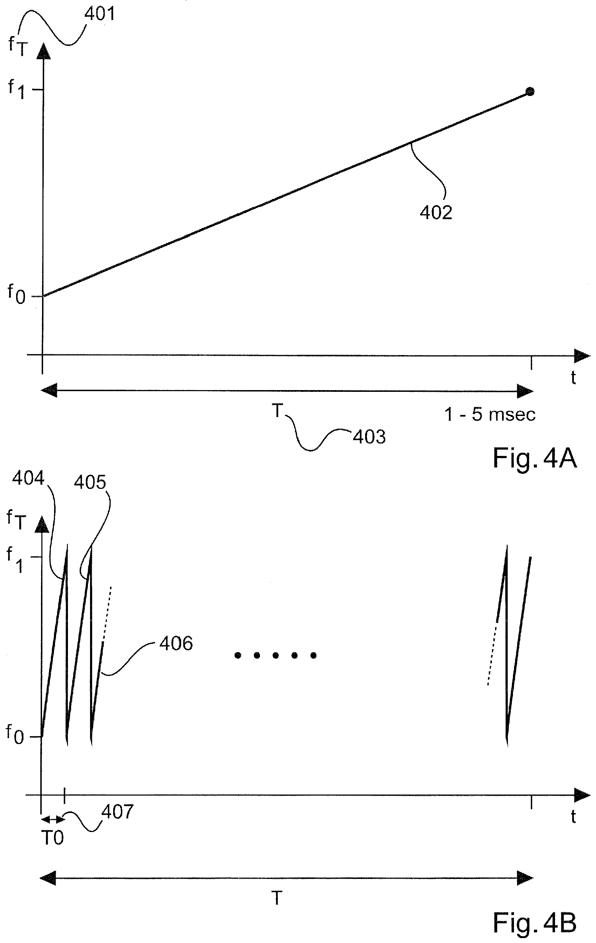

Figur 4A zeigt vergleichend einen ersten beispielhaften Betriebsablauf bei einem Füllstandradarmessgerät 101 und Figur 4B zeigt einen typischen Betriebsablauf bei einem Radarmessgerät 100 gemäß einer Ausführungsform der Erfindung.

Bei dem Betriebsablauf der Figur 4A wird die von der Antenne 104 abgestrahlte Frequenz 401 während eines Messdurchlaufes typischerweise linear von einer Startfrequenz f0 hin zu einer Stopfrequenz f1 durchmoduliert. Da dieser Betriebsmodus auf eine Vermessung statischer Ziele mit gleichzeitig hohen Anforderungen an die Unterdrückung von Rauscheinflüssen hin optimiert wurde, wird dieser Frequenzsweep 402 sehr langsam durchgeführt. Typische Größenordnungen für die Sweepzeit T 403 liegen im Bereich von 1ms bis hin zu 5 ms. Die Radarchips 201, 301 werden von den Halbleiterherstellern vorrangig zur Beobachtung mobiler Ziele entwickelt. Über die Steuerungsschnittstelle 203, 303 kann demzufolge lediglich ein Betriebsmodus mit einem oder mehreren unmittelbar aufeinanderfolgenden Einzelsweeps 404, 405, 406 angesteuert werden. Die Zeitdauer T0 407 eines solchen Einzelsweeps ist um Größenordnungen kleiner als diejenige bei den bisherigen Radargeräten. Typische Werte für die Zeitdauer T0 407 liegen im Bereich von wenigen Mikrosekunden bis hin zu einigen 100 Mikrosekunden. Ein Betrieb des Radargerätes mit einem einzigen solchen Sweep führt systembedingt daher zu einer Anhebung des Rauschpegels um typischerweise 20 bis 30 dB. Zudem besteht das Problem, dass die Echosignale aufeinanderfolgende Sweeps 404, 405, 406 nicht in der dafür notwendigen Geschwindigkeit auf Echos hin untersucht werden können.

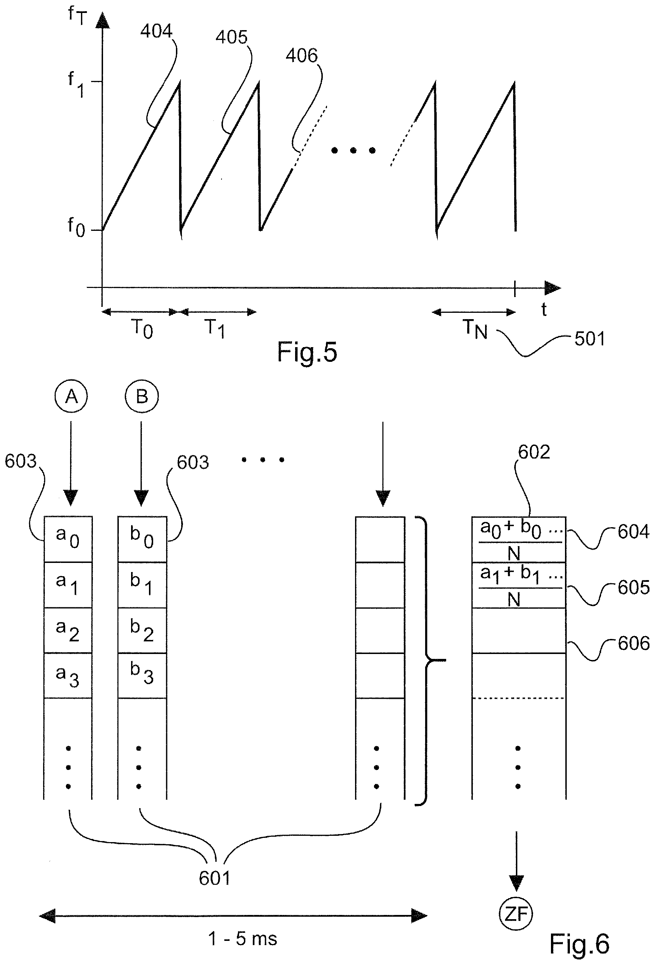

Die neuen Radargeräte 100 weisen daher eine Rauschpegelreduktionseinrichtung oder -einheit 206, 303 auf, deren Funktionsweise anhand der Figuren 5 und 6 näher erläutert werden soll. Es sei an dieser Stelle darauf hingewiesen, dass die Rauschpegelreduktionseinheit 206, 303 Teil des Auswerteprozessors 109 sein kann, und auf diesem durch Softwareroutinen umgesetzt werden kann.

Es kann aber auch vorgesehen sein, die Rauschpegelreduktionseinheit 206, 303 mittels eines oder mehrerer programmierbarer Logikbausteine (GAL, FPGA) oder durch einen spezialisierten ASIC direkt als Hardwareschaltung zu realisieren.

Figur 5 zeigt einen weiteren beispielhaften Betriebsablauf. Das Radarmessgerät 100 strahlt eine Sequenz von Einzelsweeps 404, 405, 406 in Richtung der Füllgutoberfläche 105 ab, und empfängt im Wesentlichen zeitgleich die digitalisierten Echosignale 207, 304. Die daraus entstehenden digitalisierten Zwischenfrequenzsignale 207, 304 werden in der Rauschpegelreduktionseinheit 206, 303 zunächst in einem Speicherbereich abgelegt. Nach Abschluss der Hochfrequenzmessung zum Zeitpunkt 501 werden die im Speicher liegenden Daten 601 zunächst logisch gruppiert, und zwar derart, dass die während eines Einzelsweeps 404, 405, 406 erfassten Daten zu einer Gruppe A, B, ... zusammengefasst werden. Die Mittelungseinheit 206, 303 berechnet aus diesen Teilgruppen einen resultierenden Mittelungsvektor ZF (602), indem der arithmetische Mittelwert 604 für die einzelnen Samples 603 ermittelt wird. Es kann vorgesehen sein, dass der Radarbaustein 201, 301 derart parametriert wird, dass die Anzahl der abgesendeten Sweeps N 404, 405, 406 gleich einer Potenz der Zahl zwei ist. Die für jede zu ermittelnde Stelle 604, 605, 606 notwendige Division durch N kann dann in besonders effizienter Weise durch Anwendung einer Schiebeoperation in einem digitalen Rechensystem realisiert werden. Das resultierende ZF-Signal 602 kann entsprechend den bekannten Verfahren weiter verarbeitet werden, also insbesondere durch FFT in eine Echokurve umgesetzt werden, und auf Echos und deren Position hin untersucht werden. Durch die Mittelung reduziert sich der Rauschpegel im ZF-Signal 602, was die Verarbeitung extrem kleiner Reflexionssignale erst ermöglicht. Es kann vorgesehen sein, die Parametrierung der Radarchips 201, 301 derart vorzusehen, dass die Dauer einer Kaskade von Einzelsweeps 404, 405, 406 im Wesentlichen der Zeitspanne T 403 aktueller Füllstandmessgeräte entspricht.

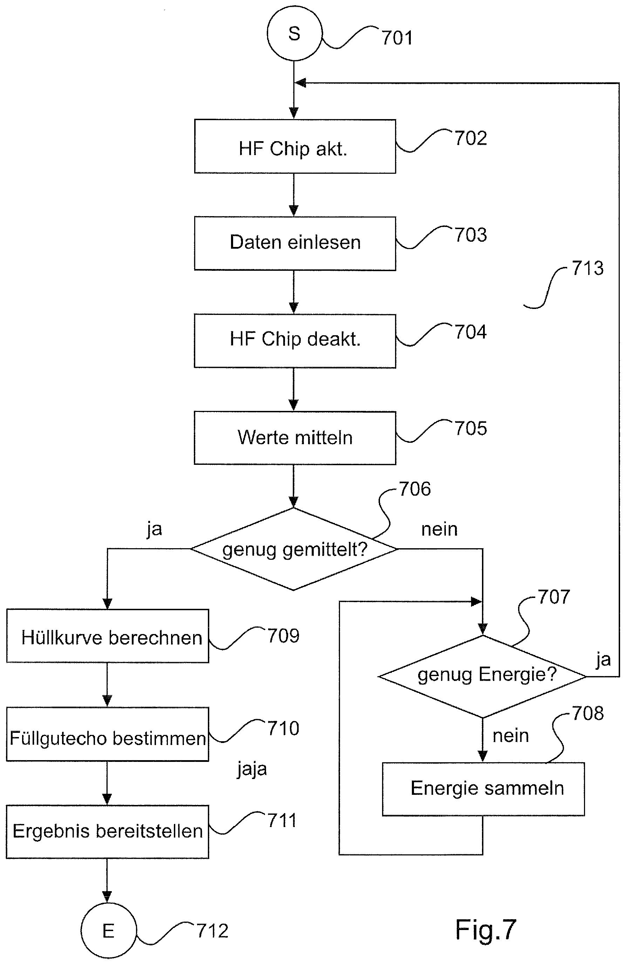

Durch den Wechsel der Halbleitertechnologie von GaAs hin zu SiGe / CMOS kann jedoch nicht davon ausgegangen werden, dass diese Messzeit 501 zu ähnlich niedrigem Systemrauschen führt wie bei bestehenden Messgeräten 101. Ein weiterer Aspekt der Erfindung sieht daher einen erweiterten oder alternativen Mechanismus zur Mittelung vor, um eine weitere Absenkung des Rauschpegels zu erreichen. Da im Umfeld der Zweileitertechnik ein Betrieb leistungshungriger Radarkomponenten stets den Einsatz einer Energiemanagementeinheit notwendig macht, wird das Verfahren nach Figur 7 auch diesem Aspekt gerecht.

Der modifizierte Messablauf beginnt im Startzustand 701 mit deaktiviertem Radarchip. Im Schritt 702 wird der Radarchip 201, 301 aktiviert. Dies kann durch Einschalten der Versorgungsspannung des Chips und / oder ggf. durch Schreiben einer entsprechenden Parametersequenz über die Schnittstelle 203, 305 erfolgen. Im Schritt 703 wird vom Radarchip zumindest eine Sequenz 404, 405, 406 an Sweeps abgesendet, wieder empfangen und zu einem Zwischenfrequenzsignal verarbeitet, welches von einer Rauschpegelreduktionseinheit 206, 303 ggf. unter Hinzuziehen eines A/D-Wandlers 108 erfasst wird. Im Schritt 704 wird der Radarchip 201, 301 wieder deaktiviert, um Energie zu sparen. Im Schritt 705 werden die erfassten Zwischenfrequenzwerte 601, 603 von der Rauschpegelreduktionseinheit 206, 303 entsprechend dem Verfahren der Figur 6 in ein erstes gemitteltes Zwischenfrequenzsignal 602 umgesetzt. Im Schritt 706 wird überprüft, ob ein vorgebbares Rauschunterdrückungsniveau bereits erreicht worden ist. Ist dem nicht der Fall, so wird im Schritt 707 zunächst überprüft, ob genügend Energie im Sensor und hier insbesondere in der Netzteileinheit 110 vorhanden ist, um eine weitere Radarsignalerfassungssequenz entsprechend Figur 5 abzusetzen. Für den Fall eines Energiedefizits wird zunächst im Schritt 708 verharrt, bis genügend Energie vorhanden ist. Danach beginnt der Sensor mit dem Schritt 702 damit, weitere Echosignale zu erfassen. Sobald genügend Echokurven gemittelt worden sind, kann im Schritt 706 festgestellt werden, dass ein vorgegebenes Rauschunterdrückungsniveau erreicht worden ist. Der Sensor geht im Schritt 709 dazu über, aus der aus mehreren Zyklen 702 bis 705 gebildeten resultierende Mittelungskurve 602 nach bekannten Verfahren eine Echokurve zu ermitteln. Im Schritt 710 wird ebenfalls nach bekannten Verfahren das Füllgutecho und dessen Position innerhalb des Behälters 113 ermittelt. Der auf diese Weise gewonnene Messwert wird im Schritt 711 nach außen hin in analoger und/oder digitaler Weise bereitgestellt. Der Messdurchgang endet im Zustand 712. Aus dem beschriebenen Ablauf heraus wird ersichtlich, dass im Rahmen der Verwendung hochintegrierter RSOC's innerhalb eines Füllstandmessgerätes im Allgemeinen eine kontinuierliche Überwachung und Steuerung des Energieniveaus im Sensor notwendig wird. Die Netzteileinheit 110 kann hierzu modifiziert werden, und den Prozessor 109 direkt anweisen, den Radarchip 201, 301 mit entsprechenden Parametriersequenzen in einen energiesparenden Zustand zu versetzen. Es kann auch vorgesehen sein, dass der Prozessor 109 diese Steuerung selbst übernimmt. Es kann ferner vorgesehen sein, dass der Radarchip 109 einen Temperatursensor aufweist, der vom Prozessor ausgelesen wird. Bei Erreichen einer vorgebbaren Maximaltemperatur, ggf. unter Berücksichtigung der aktuellen Umgebungstemperatur und unter Berücksichtigung ggf. vorgegebener Grenztemperaturen aufgrund von Explosionsschutzanforderungen kann der Prozessor den Radarchip auch bei Vorhandensein eines ausreichenden Energieniveaus deaktivieren, um die Temperatur innerhalb des Bausteins 201, 301 zu senken. Auch dieser Aspekt kann applikationsspezifisch für eine Verwendung der RSOC's im Füllstandsensor implementiert werden.

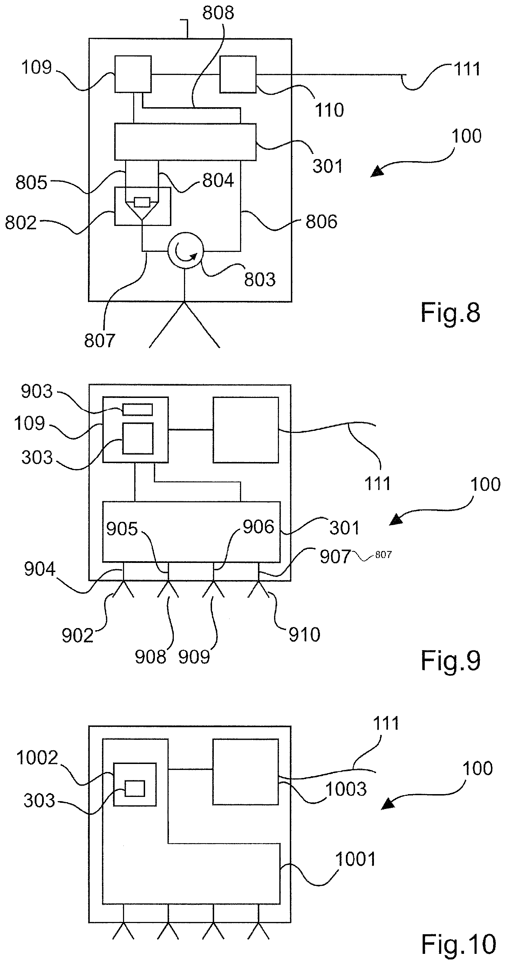

Figur 8 zeigt eine weitere Ausführungsform eines Füllstandmessgeräts 100. Der Sensor 801 weist wiederum zumindest einen Radarchip 301 auf, welcher in SiGe oder CMOS - Technologie realisiert ist. Die maximal erzeugbare Sendeleistung ist in dieser Technologie prinzipiell geringer als bei den bislang verwendeten GaAs - Bausteinen. Durch die höhere Integrationsdichte ist es aber möglich, mehrere Sendekanäle 804, 805 und/oder mehrere Empfangskanäle 806 auf einem Radarchip zu realisieren. Es kann nicht erfindungsgemäß auch vorgesehen sein, mehrere Sende- und/oder Empfangskanäle 804, 805, 806 durch den Einbau mehrerer Radarchips 301 zu verwirklichen, was aufgrund der im Vergleich zu bislang bekannten Radarsystemen 101 dramatisch reduzierten Systemkosten dennoch wirtschaftlich sein kann. Ein Aspekt der Erfindung ist nun, zumindest zwei der Sendekanäle 804, 805 und/oder Empfangskanäle 806 durch eine Signalpegelerhöhungseinrichtung oder -einheit 802 miteinander zu verknüpfen. Im Beispiel der Figur 8 werden gerade zwei Sendekanäle 804, 805 mit Hilfe eines inversen Wilkinson-Teilers zu einem resultierenden Sendesignal 807 kombiniert. Die beiden Sendekanäle 804, 805 müssen durch Vorgabe entsprechender Steuerbefehle 808 derart angesteuert werden, dass beide Sendesignale während eines Messzyklus 404, 405 aktiv sind. Über die Sende-Empfangsweiche 803 wird das kombinierte Signal 807 mit nahezu doppelter Leistung an die Antenne weitergeleitet. Durch die beschriebene Maßnahme kann erreicht werden, dass das Sendesignal einen Pegel erreicht, der gleich oder größer dem Pegel des Sendesignals bekannter Füllstandsensoren 101 ist. Der in Figur 8 dargestellte Wilkinson-Teiler kann alternativ durch einen in Mikrostreifenleitungstechnik realisierten Balun ersetzt werden, wobei die Ansteuerung 808 dann derart erfolgt, dass die beiden Sendesignale 804, 805 gerade mit 90° Phasenversatz erzeugt werden. Es kann auch vorgesehen sein, die Sende- und Empfangsweiche 803 entfallen zu lassen, und das Füllstandmessgerät mit getrennten Sende- und Empfangsantennen zu realisieren. Es kann ergänzend oder alternativ vorgesehen sein, bei Vorhandensein mehrerer Empfangskanäle die reflektierten Signale mit mehreren Kanälen zu erfassen, und die Signalpegelerhöhungseinheit auf der Seite der digitalen Signalverarbeitung in Software oder programmierbarer Logik zu realisieren.

Figur 9 zeigt eine Anwendung der Erfindung im Rahmen eines die Topologie eines Füllguts erfassenden Füllstandmessgerätes 100. Der Radarchip 109 besitzt mehrere mit Antennen 902 verbundene Sende- und /oder Empfangskanäle. Der Steuerungsprozessor 109 besitzt eine Rauschpegelreduktionseinheit 303, welche während mehrerer Messzyklen 404, 405, 406 die von den Empfangskanälen im RSOC 301 umgesetzten Echosignale mittelt. Auf diese Weise wird das Rauschen der Signale reduziert. Ist dieses unter einen vorgebbaren Wert gefallen, werden die rauschreduzierten Signale an eine Strahlformungseinheit 903 weitergeleitet, welche in Verbindung mit Algorithmen zur digitalen Strahlformung die Topologie einer Schüttgutoberfläche 105 ermitteln kann.

Figur 10 zeigt eine Weiterentwicklung mit einem hochintegrierten RSOC 1001, welcher die Funktionseinheiten des Radarchips 301 mit der Funktionalität eines Rechenwerks 1002 kombiniert. Innerhalb des Rechenwerks 1002 wird eine Rauschpegelreduziereinheit 303 implementiert, welche die halbleitertechnologiebedingten Defizite in Bezug auf das Rauschen kompensiert. Um der Vorgabe begrenzter Leitung gerecht zu werden, wird eine modifizierte Netzteileinheit 1003 vorgesehen, welche einen größeren Energiespeicher vorsieht als bisherige Netzteileinheiten 110. Somit kann die RSOC - Einheit 1001 über mehrere Sweeps 405, 406, 407 und ggf. mehrere Messzyklen 713 hinweg durchgehend aktiviert sein, und erst nach Ermittlung eines Messwertes deaktiviert werden. Die Speicherinhalte der Mittelungseinheit 303 gehen im deaktivierten Zustand verloren, der aktuelle Messwert kann von der Netzteileinheit 1003 dennoch nach außen hin signalisiert werden.

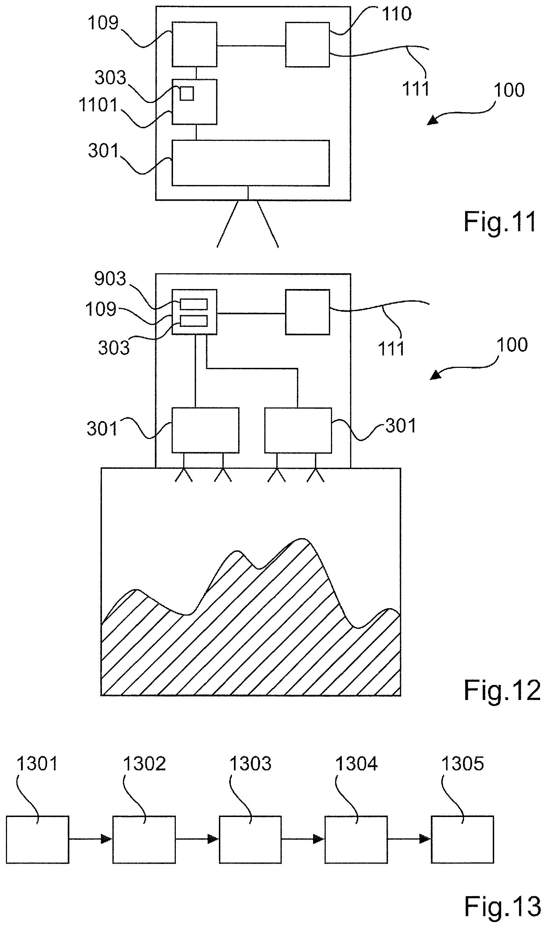

Figur 11 zeigt eine weitere Ausführungsform eines Füllstandmessgeräts 100. Zwischen der Prozessoreinheit 109 und dem Radarchip 301 wird hier ein Low-Power-FPGA 1101 vorgesehen, welcher während eines Zeitraums mit aktivem Radarchip 301 mit einem externen Betriebstakt versorgt wird, und somit die Funktionalität der Rauschpegelreduktionseinheit 303 umsetzen kann. Bei einer Mittelung 713 über mehrere Messzyklen hinweg kann der Prozessor 109 in einen energiesparenden Zustand wechseln, das Verfahren wird vom Low-Power-FPGA umgesetzt. Während ggf. notwendiger Pausen 708 wird dem FPGA lediglich die Taktversorgung entzogen, was dessen Leistungsaufnahme massiv reduziert, die teilgemittelten Messwerte 601, 603 jedoch im Speicher des FPGA erhält.

Figur 12 zeigt ein die Topologie erfassendes Füllstandmessgerät 100 entsprechend dem Schema der Figur 9. Es unterscheidet sich jedoch von der zuvor dargestellten Variante durch den Einbau einer Vielzahl an Radarchips 301, was zu einer Vergrößerung der Apertur der effektiv wirksamen Antenne nach Abschluss der digitalen Strahlformung und somit zu einer verbesserten Abbildungsqualität des Messgerätes beiträgt.

Somit wird ein Füllstandmessgerät mit wenigstens einem preisgünstigen integrierten Radarchip bereitgestellt, welches eine Vorrichtung zur Erhöhung des Signal-RauschVerhältnisses dieser Bausteine aufweist, eine Vorrichtung zur Verringerung des Energieverbrauchs dieser Bausteine und/oder eine Vorrichtung zur Begrenzung der Erwärmung der Schaltkreise.

Fig. 13 zeigt ein Flussdiagramm eines Verfahrens gemäß einer Ausführungsform der Erfindung. In Fig. 1301 erzeugt jeder einer Vielzahl von Sendekanälen ein hochfrequentes Sendesignal, das jeweils ausgesendet wird. In Schritt 1302 werden die entsprechenden Empfangssignale von mehreren Empfangskanälen empfangen. Diese Schritte können von einem Radarsystem-on-chip durchgeführt werden. In Schritt 1303 wird das Signal-Rausch-Verhältnis eines oder sämtlicher Empfangssignale erhöht, indem die Ergebnisse mehrerer, zeitlich hintereinander durchgeführter Messungen gemittelt werden. Insbesondere kann vorgesehen sein, dass die digitalisierten Zwischenfrequenzsignale der hintereinander durchgeführten Messungen gemittelt werden. Jede Messung wird durchgeführt, indem das Sendesignal eine Frequenzrampe durchläuft. In Schritt 1304 wird festgestellt, dass das Messergebnis verbesserungswürdig ist und in Schritt 1305 werden zwei oder mehrere der Sendekanäle miteinander kombiniert, um die Leistung des resultierenden kombinierten Sendekanals zu erhöhen.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät (100), wobei das Füllstandmessgerät (100) als FMCW Füllstandmessgerät ausgeführt ist, aufweisend:
einen integrierten Mikrowellenschaltkreis (201, 301, 1001) in Form eines Radarsystems on Chip mit mehreren Sendekanälen (904, 905, 906, 907, 804, 805) auf dem Radarchip, jeweils eingerichtet zur Erzeugung eines hochfrequenten Sendesignals, und einem oder mehreren Empfangskanälen (904, 905, 906, 907, 804, 805) auf dem Radarchip, jeweils eingerichtet zum Empfang der an der Füllgutoberfläche reflektierten Sendesignale;
**gekennzeichnet durch** f
eine Rauschpegelreduktionseinrichtung (206, 303), eingerichtet zur Erhöhung eines Signal-Rauschverhältnisses eines Empfangssignals, welches auf die an der Füllgutoberfläche reflektierten Sendesignale zurückzuführen ist, durch Mittelung der Ergebnisse mehrerer, zeitlich hintereinander durchgeführter Messungen, wobei jede der zeitlich hintereinander durchgeführten Messungen einen Frequenzsweep umfasst und jede der Messungen eine Vielzahl von während eines Einzelsweeps (404, 405, 406) erfassten Daten beinhaltet, und/oder
eine Signalpegelerhöhungseinrichtung (802), eingerichtet zur Kombination von zwei der Sendekanäle (804, 805) zum Erzeugen eines kombinierten Sendesignals mit erhöhter Leistung und/oder zwei der Empfangskanäle (804/805) zum Erzeugen eines kombinierten Empfangssignals mit erhöhter Leistung.

2. Füllstandmessgerät (100) nach Anspruch 1,
wobei die Rauschpegelreduktionseinrichtung (206, 303) eingerichtet ist, nach der Mittelung der Ergebnisse der mehreren, zeitlich hintereinander durchgeführten Messungen festzustellen, ob ausreichend viele Messungen gemittelt wurden, und bei Bedarf weitere Messungen zu triggern, deren Ergebnisse ebenfalls der Mittelung zugeführt werden.

3. Füllstandmessgerät (100) nach einem der vorhergehenden Ansprüche,
wobei der integriere Mikrowellenschaltkreis zumindest einen integrierten Analog-Digitalwandler aufweist, eingerichtet zum Erzeugen des Empfangssignals in Form eines digitalisierten Zwischenfrequenzsignals, welches auf ein oder mehrere an der Füllgutoberfläche reflektierte Sendesignale zurückzuführen ist.

4. Füllstandmessgerät (100) nach einem der vorhergehenden Ansprüche,
wobei an zumindest zwei der Sendekanäle jeweils eine Antenne (902, 908, 909, 910) angeschlossen ist.

5. Füllstandmessgerät (100) nach einem der vorhergehenden Ansprüche,
wobei der integrierte Mikrowellenschaltkreis auf BiCMOS-Technologie basiert.

6. Füllstandmessgerät (100) nach einem der vorhergehenden Ansprüche,
wobei der integrierte Mikrowellenschaltkreis auf SiGe-Technologie basiert.

7. Füllstandmessgerät (100) nach einem der vorhergehenden Ansprüche,
wobei der integrierte Mikrowellenschaltkreis auf HF-CMOS-Technologie basiert und somit Hochfrequenzschaltungsteile für Frequenzen von 75 GHz oder mehr aufweist.

8. Füllstandmessgerät (100) nach einem der vorhergehenden Ansprüche,
weiter aufweisend einen Prozessor (109) und einen Temperatursensor, der vom Prozessor ausgelesen wird, wobei bei Erreichen einer vorgebbaren Maximaltemperatur der Prozessor eingerichtet ist, den integrierten Mikrowellenschaltkreis (201, 301, 1001) auch bei Vorhandensein eines ausreichenden Energieniveaus zu deaktivieren, um die Temperatur innerhalb des Mikrowellenschaltkreises zu senken.

9. Füllstandmessgerät (100) nach einem der vorhergehenden Ansprüche, eingerichtet zur Erfassung der Topologie eines Mediums in einem Behälter.

10. Verfahren zum Messen eines Füllstands eines Mediums in einem Behälter oder einer Topologie einer Oberfläche des Mediums mittels eines Füllstandmessgeräts (100) nach einem der Ansprüche 1 bis 9, das Verfahren aufweisend die Schritte:
Erzeugen eines hochfrequenten Sendesignals mit jeweils einem von mehreren Sendekanälen (904, 905, 906, 907, 804, 805);
Empfangen der an der Füllgutoberfläche reflektierten Sendesignale mit mehreren Empfangskanälen (904, 905, 906, 907, 804, 805);
Erhöhen eines Signal-Rauschverhältnisses eines Empfangssignals, welches auf die an der Füllgutoberfläche reflektierten Sendesignale zurückzuführen ist, durch Mittelung der Ergebnisse mehrerer, zeitlich hintereinander durchgeführter Messungen, wobei jede der zeitlich hintereinander durchgeführten Messungen einen Frequenzsweep umfasst und jede der Messungen eine Vielzahl von während eines Einzelsweeps (404, 405, 406) erfassten Daten beinhaltet, und/oder
Kombinieren von zwei der Sendekanäle (804, 805) zum Erzeugen eines kombinierten Sendesignals mit erhöhter Leistung und/oder zwei der Empfangskanäle (804/805) zum Erzeugen eines kombinierten Empfangssignals mit erhöhter Leistung.

11. Programmelement, das, wenn es auf einem Prozessor (109) eines Füllstandmessgeräts nach einem der Ansprüche 1-9 ausgeführt wird, das Füllstandmessgerät anleitet, die Schritte nach Anspruch 10 durchzuführen.

12. Computerlesbares Medium, auf dem ein Programmelement nach Anspruch 11 gespeichert ist.

## Claims

1. Level measuring device (100), wherein the measuring device (100) is designed as a FMCW level measuring device, comprising:
an integrated microwave circuit (201, 301, 1001) in form of a radar system on chip with multiple transmitting channels (904, 905, 906, 907, 804, 805) on the radar chip, each configured for generating a high-frequency transmission signal, and one or more receiving channels (904, 905, 906, 907, 804, 805) on the radar chip, each configured for receiving the transmission signals reflected at the surface of the filling material;
**characterized in**
a noise level suppression device (206, 303), configured for increasing a signal-noise ratio of a receiving signal, which is caused by the transmission signals reflected at the surface of the filling material, by averaging the results of multiple consecutive performed measurements, wherein each of the consecutive performed measurements comprises a frequency sweep and each of the measurements comprises a multitude of data collected during a single sweep (404, 405, 406) and/or
a signal level boosting device (802), configured for combining two of the transmitting channels (804, 805) to generate a combined transmission signal with increased power and/or two of the receiving channels (804, 805) to generate a combined receiving signal with increased power.

2. Level measuring device (100) according to claim 1,
wherein the noise level suppression device (206, 303) is configured to determine, after the results of the multiple consecutive performed measurements, whether a sufficient number of measurements have been averaged, and to trigger further measurements, if necessary, which results are also added to the averaging.

3. Level measuring device (100) according to one of the preceding claims,
wherein the integrated microwave circuit comprises at least one integrated analog to digital converter, configured for generating the receiving signal in form of a digitalised intermediate frequency signal, which is caused by one or multiple transmission signals reflected at the surface of the filling material.

4. Level measuring device (100) according to one of the preceding claims,
wherein an antenna (902, 908, 909, 910) is connected to each of at least two of the transmitting channels.

5. Level measuring device (100) according to one of the preceding claims,
wherein the integrated microwave circuit is based on BiCMOS-technology.

6. Level measuring device (100) according to one of the preceding claims,
wherein the integrated microwave circuit is based on SIGe-technology.

7. Level measuring device (100) according to one of the preceding claims,
wherein the integrated microwave circuit is based on HF-CMOS-technology and therefore comprises high frequency switchgears for frequencies of 75 GHz or higher.

8. Level measuring device (100) according to one of the preceding claims,
further comprising a processor (109) and a temperature sensor, which is being read out by the processor, wherein after reaching a predefinable maximal temperature the processor is configured to deactivate the integrated microwave circuit (201, 301, 1001) even in case a sufficient energy level is present to lower the temperature inside the temperature sensor.

9. Level measuring device (100) according to one of the preceding claims,
configured for detecting the surface topology of the medium in a container.

10. Method for measuring a level of a medium in a container or a surface topology of the medium by means of a level measuring device (100) according to one of the claims 1 to 9, the method comprising the steps:
Generating of a high frequency transmitting signal with respectively one of multiple transmitting channels (904, 905, 906, 907, 804, 805);
Receiving of the transmitting signals reflected on the surface of the filling material with multiple receiving channels (904, 905, 906, 907, 804, 805);
Increasing of a signal-noise ratio of a receiving channel, which is caused by the transmission signals reflected at the surface of the filling material, by averaging the results of multiple consecutive performed measurements, wherein each of the consecutive performed measurements comprises a frequency sweep and each of the measurements comprises a multitude of data collected during a single sweep (404, 405, 406) and/or
Combining two of the transmitting channels (804, 805) to generate a combined transmission signal with increased power and/or two of the receiving channels (804, 805) to generate a combined receiving signal with increased power.

11. Program element, which, when executed on a processor of a level measuring device according to one of the claims 1 to 9, instructs the level measuring device to carry out the steps according to claim to 10.

12. Computer readable medium, on which a program element according to claim 11 is stored.

## Revendications

1. Appareil de mesure de niveau de remplissage (100), l'appareil de mesure de niveau de remplissage (100) étant réalisé sous la forme d'un appareil de mesure de niveau de remplissage FMCW, présentant :
un circuit intégré à micro-ondes (201, 301, 1001) sous la forme d'un système radar sur puce avec plusieurs canaux d'émission (904, 905, 906, 907, 804, 805) sur la puce radar,
chacun conçu pour générer un signal d'émission haute fréquence, et un ou plusieurs canaux de réception (904, 905, 906, 907, 804, 805) sur la puce radar, chacun conçu pour recevoir les signaux d'émission réfléchis à la surface du produit de remplissage ;
**caractérisé par**
un moyen de réduction de niveau de bruit (206, 303) conçu pour augmenter un rapport signal/bruit d'un signal de réception qui est dû aux signaux d'émission réfléchis sur la surface du produit de remplissage, en calculant la moyenne des résultats de plusieurs mesures effectuées successivement dans le temps, chacune des mesures effectuées successivement dans le temps comprenant un balayage de fréquence et chacune des mesures contenant une pluralité de données acquises pendant un balayage unique (404, 405, 406), et/ou
un moyen d'augmentation de niveau de signal (802), conçu pour combiner deux des canaux d'émission (804, 805) pour générer un signal d'émission combiné ayant une puissance accrue et/ou deux des canaux de réception (804/805) pour générer un signal de réception combiné ayant une puissance accrue.

2. Appareil de mesure de niveau de remplissage (100) selon la revendication 1,
dans lequel le moyen de réduction de niveau de bruit (206, 303) est conçu pour déterminer, après le calcul de la moyenne des résultats des plusieurs mesures effectuées successivement dans le temps, si la moyenne a été calculée sur un nombre suffisant de mesures et, si nécessaire, pour déclencher d'autres mesures dont les résultats sont également fournis au calcul de la moyenne.

3. Appareil de mesure de niveau de remplissage (100) selon l'une des revendications précédentes,
dans lequel le circuit intégré à micro-ondes présente au moins un convertisseur analogique-numérique intégré, conçu pour générer le signal de réception sous la forme d'un signal de fréquence intermédiaire numérisé, qui est dû à un ou plusieurs signaux d'émission réfléchis à la surface du produit de remplissage.

4. Appareil de mesure de niveau de remplissage (100) selon l'une des revendications précédentes,
dans lequel une antenne (902, 908, 909, 910) est respectivement raccordée à au moins deux des canaux d'émission.

5. Appareil de mesure de niveau de remplissage (100) selon l'une des revendications précédentes,
dans lequel le circuit intégré à micro-ondes est basé sur la technologie BiCMOS.

6. Appareil de mesure de niveau de remplissage (100) selon l'une des revendications précédentes, dans lequel le circuit intégré à micro-ondes est basé sur la technologie SiGe.

7. Appareil de mesure de niveau de remplissage (100) selon l'une des revendications précédentes,
dans lequel le circuit intégré à micro-ondes est basé sur la technologie HF-CMOS et présente donc des parties de circuit haute fréquence pour des fréquences de 75 GHz ou plus.

8. Appareil de mesure de niveau de remplissage (100) selon l'une des revendications précédentes,
présentant en outre un processeur (109) et un capteur de température qui est lu par le processeur, le processeur étant conçu, lorsqu'une température maximale prédéfinissable du processeur est atteinte, pour désactiver le circuit intégré à micro-ondes (201, 301, 1001) même en présence d'un niveau d'énergie suffisant, afin d'abaisser la température à l'intérieur du circuit à micro-ondes.

9. Appareil de mesure de niveau de remplissage (100) selon l'une des revendications précédentes, conçu pour détecter la topologie d'un milieu dans un récipient.

10. Procédé de mesure d'un niveau de remplissage d'un milieu dans un récipient ou d'une topologie d'une surface du milieu au moyen d'un appareil de mesure de niveau de remplissage (100) selon l'une des revendications 1 à 9, le procédé comprenant les étapes consistant à :
générer un signal d'émission haute fréquence avec un canal d'émission respectif parmi plusieurs canaux d'émission (904, 905, 906, 907, 804, 805) ;
recevoir les signaux d'émission réfléchis à la surface du produit de remplissage avec plusieurs canaux de réception (904, 905, 906, 907, 804, 805) ;
augmenter un rapport signal/bruit d'un signal de réception dû aux signaux d'émission réfléchis à la surface du produit de remplissage en calculant la moyenne des résultats de plusieurs mesures effectuées successivement dans le temps,
chacune des mesures effectuées successivement dans le temps comprenant un balayage de fréquence et chacune des mesures contenant une pluralité de données acquises pendant un balayage unique (404, 405, 406), et/ou
combiner deux des canaux d'émission (804, 805) pour générer un signal d'émission combiné ayant une puissance accrue et/ou deux des canaux de réception (804/805) pour générer un signal de réception combiné ayant une puissance accrue.

11. Élément de programme qui, lorsqu'il est exécuté sur un processeur (109) d'un appareil de mesure de niveau de remplissage selon l'une des revendications 1 à 9, amène l'appareil de mesure de niveau de remplissage à mettre en œuvre les étapes selon la revendication 10.

12. Support lisible par ordinateur sur lequel est stocké un élément de programme selon la revendication 11.
